# EUROPEAN PATENT SPECIFICATION

(11) **EP 1 459 158 B1**
(45) Date of publication and mention of the grant of the patent: **12.04.2006**
(21) Application number: 02786645.8
(22) Date of filing: 31.10.2002
(51) Int. Cl.: G06F 1/32

(54) **METHOD AND APPARATUS FOR REGULATION OF ELECTRICAL COMPONENT TEMPERATURE AND POWER CONSUMPTION RATE THROUGH BUS WIDTH RECONFIGURATION**
METHODE UND VORRICHTUNG ZUR REGELUNG DER TEMPERATUR VON ELEKTRISCHEN KOMPONENTEN UND DER STROMVERBRAUCHSRATE DURCH BUSWEITENREKONFIGURATION
PROCEDE ET APPAREIL PERMETTANT DE REGULER LA TEMPERATURE DE COMPOSANTS ELECTRIQUES ET LE TAUX DE CONSOMMATION D'ENERGIE AU MOYEN DE LA RECONFIGURATION DE LARGEURS DE BUS

(30) Priority: 05.11.2001 US 10395
(43) Date of publication of application: 22.09.2004
(73) Proprietor: INTEL CORPORATION, Santa Clara, CA 95052 (US)
(72) Inventor: BODAS, Deva, Federal Way, WA 98023-8144 (US)
(74) Representative: Goddar, Heinz J.
(86) International application number: PCT/US2002/035227
(87) International publication number: WO 2003/041267

(56) References cited:
- WO-A-00/58847
- US-A- 5 761 456
- US-A- 5 936 953
- US-B1- 6 304 930
- "ADVANCED CONFIGURATION AND POWER INTERFACE SPECIFICATION" , ADVANCED CONFIGURATION AND POWER INTERFACE SPECIFICATION, XX, XX, PAGE(S) I-XII,1-266 XP002905878 the whole document
- BENINI L ET AL: "System-level power optimization: techniques and tools" PROCEEDINGS 1999 INTERNATIONAL SYMPOSIUM ON LOW POWER ELECTRONICS AND DESIGN. (ISLPED). SAN DIEGO, CA, AUG. 16 - 17, 1999, INTERNATIONAL SYMPOSIUM ON LOW POWER ELECTRONICS AND DESIGN, NEW YORK, NY: ACM, US, 16 August 1999 (1999-08-16), pages 288-293, XP010356005 ISBN: 1-58113-133-X
- BENINI L ET AL: "System-level dynamic power management" LOW-POWER DESIGN, 1999. PROCEEDINGS. IEEE ALESSANDRO VOLTA MEMORIAL WORKSHOP ON COMO, ITALY 4-5 MARCH 1999, LOS ALAMITOS, CA, USA,IEEE COMPUT. SOC, US, 4 March 1999 (1999-03-04), pages 23-31, XP010323924 ISBN: 0-7695-0019-6

## Description

### Background Information

The present invention relates to electrical system management. More specifically, the present invention relates to the regulation of electrical component temperature and power consumption rate through the reconfiguration between different interconnect bus widths.

Interconnect bus technology is continually driving towards higher-speed serial bus utilization. Along with increased communication rates comes higher power consumption and heat production. In many systems today, temperature regulation of high-power processors, such as central processing units (CPU), involves the usage of electric fan(s). Often, a system has its own thermally segregated cooling zone incorporating routed ventilation ducts. For the other components in such a system, other system fan(s) are utilized to cool the memory, input/output (I/O) adapters, and chipset components.

With faster, denser memory, high-speed I/O devices, and chipsets with high-speed interconnects, temperature regulation becomes an even more challenging problem. Typically, a larger diameter fan or fan with higher rotational speed is used to compensate for the additional heat production. However, such solutions result in higher acoustic noise (in addition to possible electromagnetic interference), making the system unfit for many environments and may not be feasible due to dimensional constraints. Further, cooling fans can consume a considerable amount of valuable system power.

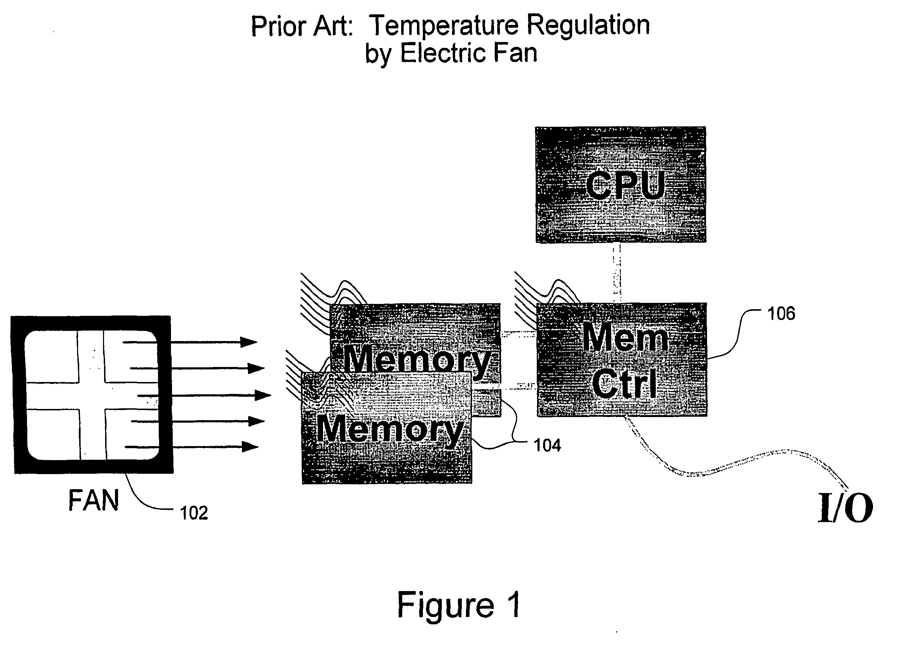

Figure 1 illustrates the layout of a typical computer memory system utilizing an electric fan for temperature reduction. A continuously-operating fan blows cool air towards and across computer component(s), such as memory 104 and/or a memory controller 106 (as shown). Or, in another configuration in the art, a fan draws hot air from the component(s), sending it out of the computer enclosure (not shown). As stated above, an electric fan 102, such as is typical in the art produces a large amount of undesirable noise, and because of frictional losses incurred by the moving parts, fan operation consumes a great deal of valuable system energy.

It is therefore desirable to have a system for temperature regulation of electronic components that avoids the above-mentioned problems, in addition to having other advantages, such as improved control over power consumption rate.
US 6,304,930 B1 discloses a signal transmission system having multiple transmission modes.

### Brief Description Of The Drawings

Figure 1 illustrates the layout of a typical computer memory system utilizing an electric fan for temperature reduction.

Figure 2 provides a block diagram illustration of a power and temperature regulation device utilizing interface bus width control under principles of the present invention.

Figure 3 provides an illustration of the process of power/thermal management under principles of the present invention.

### Detailed Description

As computer performance improves through increased component speed, thermal energy production increases as well. An embodiment of the present invention provides for a method to balance computer performance with chip environmental needs.

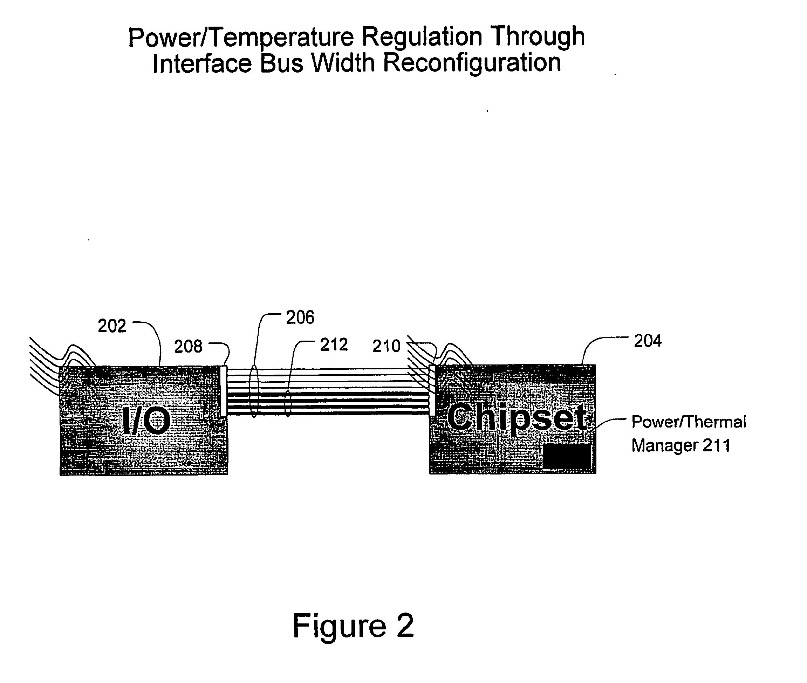

Figure 2 provides a block diagram illustration of a power and temperature regulation device utilizing interface bus width control under principles of the present invention. In one embodiment, an interface 206 between a chipset 204 and an Input/Output (I/O) controller 202 exists. In accessing I/O 202, the chipset 204 in one embodiment utilizes an 8-bit wide serial high-speed interconnect link 206 interface and consumes approximately 2 watts of power per port 208,210. If both sides, initiator (202/204) and target (204/202), of an interconnect link 206 reside inside one system, such as is shown in figure 2, 4 watts of power per 8-bit link 206 are consumed.

In one embodiment, the bus width, representative of the number of communication lines (channels) utilized by the bus, is reconfigurable to different sizes (e.g. 2-bit, 4-bit, 8-bit, etc.). In one embodiment, this reconfiguration can be performed utilizing such buffering methods as are well known in the art, e.g. internal timing logic used to control an interface between I/O buffers (not shown) and the chip's 204 internal bus. Figure 2 demonstrates an 8-bit bus (interconnect link) 206, which is currently utilizing only 4 of the lines (4-bit) 212 to reduce heat production and/or to reduce the rate of energy consumption. In one embodiment, the bus width is reconfigurable during system operation after 'reset' or 'power-on' (in addition to at 'start-up'). In one embodiment, reconfiguration can be performed by various methods known in the art. Reconfiguration may be instigated by either an initiator (202/204) or a target (204/202) by sending a special command (or request). In one embodiment, the initiator (202/204) and target (204/202) may then go through a 'reset' process to change the bus width. In the alternative, the initiator (202/204) and target (204/202) may change the bus width following a specific handshake process.

In one embodiment, a power/thermal manager 211 initiates and executes reconfiguration under Operating System-directed configuration Power Management (OSPM). OSPM is a general term used by ACPI (Advanced Configuration and Power Interface), an industry standard established by Intel, Microsoft, and Toshiba (ACPI 1.0b specification, February 1999). ACPI is an open specification that encompasses PC hardware, operating system software and peripheral device interfaces. The specification provides the manner in which the Operating System (OS), motherboard hardware, and peripheral devices (such as CD-ROMs, hard drives, etc.) talk to each other regarding power usage. (See http://www.intel.com/eBusiness/products/mobile/initiatives/ ar420.htm) Operating System Directed Power Management (OSPM) involves the OS managing all power activities and providing power to devices only on an 'as-needed' basis.

In an embodiment of the present invention, a 'power event' (triggering event) triggers the power manager 211 to request a change in power consumption of an interconnect link(s) 206 by reconfiguring to a different number of utilized lines 212 in the bus(es) 206. For example, a system may have a north bridge, such as a memory controller hub (MCH), connected to two I/O bridges (IOH), each with 8-bit high-speed serial links. Such an interconnect mechanism may consume about 8 watts of system power. In one embodiment, an OSPM request to reduce to a 4-bit link may result in a reduction of power consumption to 4 watts, saving about 4 watts of power (or 50%).

In one embodiment, various situations can constitute a 'power event' for triggering bus width reconfiguration. These include: (1) Temperature increase inside the system beyond some threshold; (2) Failure of a system fan(s); (3) Increase in die temperature of a chipset component(s); (4) System requirement for operation under battery power due to failure of an Alternating Current (AC) source, etc. (bus width reduction to decrease power consumption rate); and (5) Consistently low system utilization.

This system of power/thermal regulation is also envisioned as being utilized for interface between a processor, such as a central processing unit (CPU), and a chipset (memory controller). Further, in an another alternative embodiment, the system could be used for interface between a chipset and memory, between two processors (such as CPU's) or between two I/O devices.

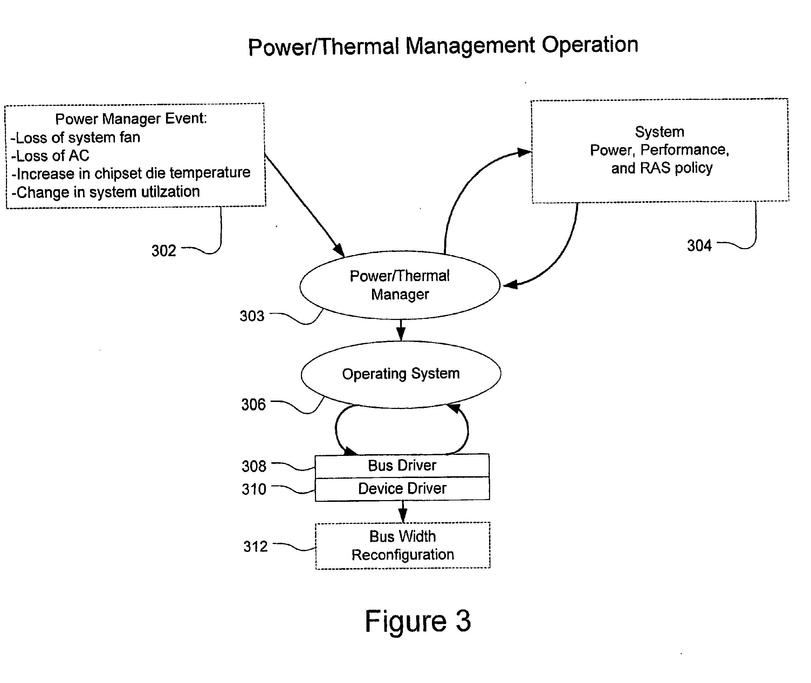

Figure 3 provides an illustration of the process of power/thermal management under principles of the present invention. In one embodiment, a 'power event' 302 is communicated to a power manager 303. The power manager 303 implements a policy-based decision 304, the policy being for management of system power, temperature regulation, performance, and 'Reliability, Availability, and Serviceability' (RAS) concerns. Based on policy, the power manager 303 may request a change of interconnect bus width of one or more system components. In an embodiment, the operating system 306 communicates with the bus and device drivers 308,310 to request a change of power state (bus width). In an embodiment, the bus and device drivers 308,310 take preparatory action and then indicate when ready for such a transition. When appropriate, the operating system 306 requests the bus width reconfiguration 312.

In one embodiment, if the customer environment is cool, the system remains configured for high performance (high speed). A system does not need to be designed for the 'worst case-scenario' (to the detriment of all system users in more temperate - environments). The system can be designed for 'normal' (average) operating conditions and environments, and if the conditions are worse than this, the system, under principles of the present invention, will reconfigure itself. In an embodiment, the system can reconfigure itself as many times as necessary after boot-up, following environmental changes.

Although several embodiments are specifically illustrated and described herein, it will be appreciated that modifications and variations of the present invention are covered by the above teachings and within the purview of the appended claims without departing from the intended scope of the invention.

## Claims

1. A system to control a communication rate between electrical components, comprising: a first component (202) including a first port (208) to be coupled to a first number (206) of communication channels, said first port to control communication between the first port (208) and the communication channels at a first communication rate, such that said first port is to communicate with a second number (212) of communication channels in response to a triggering event, said number being less than said first number, **characterized in that** a reconfiguration is performed by a thermal manager (211) to change from a communication with the first number (206) of channels to the second number (212) of channels.

2. The system of claim 1, wherein a reconfiguration is performed by a power manager to change from communication with the first number of channels to the second number of channels.

3. The system of claim 1, wherein a reconfiguration is performed by an operating system under Operating System-based Power Management (OSPM) to change from communication with the first number (206) of channels to the second number (212) of channels.

4. The system of claim 1, wherein said first number (206) of channels includes said second number (212) of channels as a subset.

5. The system of claim 4, wherein an Interconnect bus includes said first number of communication channels.

6. The system of claim 1, wherein a reconfiguration is performed to change from communication with the first number of channels to the second number of channels in response to said triggering event as a system management policy-based decision.

7. The system of claim 6, wherein said policy-based decision involves analysis of a number of decision criteria.

8. The system of claim 7, wherein said number of decision parameters include: Power Management; Thermal Management; Reliability, Availability, and Serviceability (RAS); and System Performance.

9. The system of claim 7, wherein said analysis and said reconfiguration occur at a time after system boot-up.

10. A method to control the communication rate of electrical components comprising: utilizing, by a first component (202), a first number (206) of communication channels to communicate with a second component (204) at a first communication rate; utilizing, by said first component (202), a second number (212) of communication channels to communicate with said second component (204) at a second communication rate; and reconfiguring between the utilization of said first number (206) of channels and said second (212) number of channels in response to a triggering event, **characterized in that** said reconfiguration is performed by a thermal manager (211).

11. The method of claim 10, wherein said reconfiguration is performed by a power manager (211).

12. The method of claim 10, wherein said reconfiguration is performed by an operating system under Operating System based Power Management (OSPM).

13. The method of claim 10, wherein said first number (206) of channels includes said second number (212) of channels as a subset.

14. The method of claim 13, wherein an Interconnect bus includes said first number of communication channels.

15. The method of claim 10, wherein said reconfiguration is performed in response to said triggering event as a system management policy-based decision.

16. The method of claim 15, wherein said policy-based decision involves analysis of a number of decision criteria.

17. The method of claim 16, wherein said number of decision parameters include: Power Management; Thermal Management; Reliability, Availability, and Serviceability (RAS); and System Performance.

18. The method of claim 16, wherein said analysis and said reconfiguration occur at a time after system boot-up.

19. A set of instructions residing in a storage medium, said set of instructions capable of being executed by a processor to control the communication rate of electrical components comprising:
utilizing, by a first component (202), a first number (206) of communication channels to communicate with a second component (204) at a first communication rate;
utilizing, by said first component (202), a second number (212) of communication channels to communicate with said second component (204) at a second communication rate; and
reconfiguring between the utilization of said first number (206) of channels and said second number (212) of channels in response to a triggering event, **characterized in that** said reconfiguration is performed by a thermal manager (211).

20. The set of instructions of claim 21, wherein said reconfiguration is performed by a power manager.

21. The set of instructions of claim 19, wherein said reconfiguration is performed by an operating system under Operating System based Power Management (OSPM).

22. The set of instructions of claim 19, wherein said first number (206) of channels includes said second number (212) of channels as a subset.

23. The set of instructions of claim 22, wherein an Interconnect bus includes said first number (206) of communication channels.

24. The set of instructions of claim 19, wherein said reconfiguration is performed in response to said triggering event as a system management policy-based decision.

25. The set of instructions of claim 24, wherein said policy-based decision involves analysis of a number of decision criteria.

26. The set of instructions of claim 25, wherein said number of decision parameters include: Power Management; Thermal Management; Reliability, Availability, and Serviceability (RAS); and System Performance.

27. The set of instructions of claim 25, wherein said analysis and said reconfiguration occur at a time after system boot-up.

## Patentansprüche

1. System zur Steuerung einer Kommunikationsrate zwischen elektrischen Komponenten, umfassend:
eine erste Komponente (220), umfassend einen ersten Anschluß (208) zur Kopplung mit einer ersten Anzahl (206) von Kommunikationskanälen, wobei der erste Anschluß zur Steuerung einer Kommunikation zwischen dem ersten Anschluß (208) und den Kommunikationskanälen mit einer ersten Kommunikationsrate vorgesehen ist, in der Weise daß der erste Anschluß mit einer zweiten Anzahl (212) von Kommunikationskanälen in Reaktion auf ein Triggerereignis kommuniziert, wobei die Anzahl kleiner ist als die erste Anzahl, **dadurch gekennzeichnet, daß** eine Rekonfiguration zur Änderung von einer Kommunikation mit der ersten Anzahl (206) von Kanälen zur zweiten Anzahl (212) von Kanälen durch einen thermischen Verwalter (211) durchgeführt wird.

2. System nach Anspruch 1, wobei eine Rekonfiguration zur Änderung von einer Kommunikation mit der ersten Anzahl von Kanälen zur zweiten Anzahl von Kanälen durch einen Leistungsverwalter durchgeführt wird.

3. System nach Anspruch 1, wobei eine Rekonfiguration zur Änderung von einer Kommunikation mit der ersten Anzahl (206) von Kanälen zur zweiten Anzahl (212) von Kanälen durch ein Betriebssystem unter einer Betriebssystem-basierten Leistungsverwaltung (OSPM) durchgeführt wird.

4. System nach Anspruch 1, wobei die erste Anzahl (206) von Kanälen die zweite Anzahl (212) von Kanälen als Untergruppe umfaßt.

5. System nach Anspruch 4, wobei ein Zwischenverbindungsbus die erste Anzahl von Kommunikationskanälen umfaßt.

6. System nach Anspruch 1, wobei eine Rekonfiguration zur Änderung von einer Kommunikation mit der ersten Anzahl von Kanälen zur zweiten Anzahl von Kanälen in Reaktion auf das Triggerereignis als eine auf einer Richtlinie basierende Systemverwaltungsentscheidung durchgeführt wird.

7. System nach Anspruch 6, wobei die auf einer Richtlinie basierende Entscheidung eine Analyse einer Anzahl von Entscheidungskriterien umfaßt.

8. System nach Anspruch 7, wobei die Anzahl von Entscheidungsparametem umfaßt:
Leistungsverwaltung, thermische Verwaltung, Zuverlässigkeit, Verfügbarkeit und Betriebsfähigkeit (RAS) und Systemleistung.

9. System nach Anspruch 7, wobei die Analyse und die Rekonfiguration zu einem Zeitpunkt nach dem Booten des Systems erfolgen.

10. Verfahren zur Steuerung der Kommunikationsrate elektrischer Komponenten, umfassend:
Verwenden einer ersten Anzahl (206) von Kommunikationskanälen zur Kommunikation mit einer zweiten Komponente (204) bei einer ersten Kommunikationsrate durch eine ersten Komponente (202); Verwenden einer zweiten Anzahl (212) von Kommunikationskanälen zur Kommunikation mit der zweiten Komponente (204) bei einer zweiten Kommunikationsrate durch die ersten Komponente (202); und Rekonfigurieren zwischen der Verwendung der ersten Anzahl (206) von Kanälen und der zweiten Anzahl (212) von Kanälen in Reaktion auf ein Triggerereignis, **dadurch gekennzeichnet, daß** die Rekonfiguration durch einen thermischen Verwalter (211) durchgeführt wird.

11. Verfahren nach Anspruch 10, wobei die Rekonfiguration durch einen Leistungsverwalter (211) durchgeführt wird.

12. Verfahren nach Anspruch 10, wobei die Rekonfiguration durch ein Betriebssystem unter einer Betriebssystem-basierten Leistungsverwaltung (OSPM) durchgeführt wird.

13. Verfahren nach Anspruch 10, wobei die erste Anzahl (206) von Kanälen die zweite Anzahl (212) von Kanälen als Untergruppe umfaßt.

14. Verfahren nach Anspruch 13, wobei ein Zwischenverbindungsbus die erste Anzahl von Kommunikationskanälen umfaßt.

15. Verfahren nach Anspruch 10, wobei die Rekonfiguration in Reaktion auf das Triggerereignis als eine auf einer Richtlinie basierende Systemverwaltungsentscheidung durchgeführt wird.

16. Verfahren nach Anspruch 15, wobei die auf einer Richtlinie basierende Entscheidung eine Analyse einer Anzahl von Entscheidungskriterien umfaßt.

17. Verfahren nach Anspruch 16, wobei die Anzahl von Entscheidungsparametem umfaßt:
Leistungsverwaltung, thermische Verwaltung, Zuverlässigkeit, Verfügbarkeit und Betriebsfähigkeit (RAS) und Systemleistung.

18. Verfahren nach Anspruch 16, wobei die Analyse und die Rekonfiguration zu einem Zeitpunkt nach dem Booten des Systems erfolgen.

19. Ein sich in einem Speichermedium befindender Befehlssatz, wobei der Befehlssatz dazu eingerichtet ist, von einem Prozessor zur Steuerung der Kommunikationsrate elektrischer Komponenten ausgeführt zu werden, umfassend:
Verwenden einer ersten Anzahl (206) von Kommunikationskanälen zur Kommunikation mit einer zweiten Komponente (204) bei einer ersten Kommunikationsrate durch eine erste Komponente (202);
Verwenden einer zweiten Anzahl (212) von Kommunikationskanälen zur Kommunikation mit der zweiten Komponente (204) bei einer zweiten Kommunikationsrate durch die erste Komponente (212); und
Rekonfigurieren zwischen der Verwendung der ersten Anzahl (206) von Kanälen und der zweiten Anzahl (212) von Kanälen in Reaktion auf ein Triggerereignis, **dadurch gekennzeichnet, daß** die Rekonfiguration durch einen thermischen Verwalter (211) durchgeführt wird.

20. Befehlssatz nach Anspruch 21, wobei die Rekonfiguration durch einen Leistungsverwalter durchgeführt wird.

21. Befehlssatz nach Anspruch 19, wobei die Rekonfiguration durch ein Betriebssystem unter einer Betriebssystem-basierten Leistungsverwaltung (OSPM) durchgeführt wird.

22. Befehlssatz nach Anspruch 19, wobei die erste Anzahl (206) von Kanälen die zweite Anzahl (212) von Kanälen als Untergruppe umfaßt.

23. Befehlssatz nach Anspruch 22, wobei ein Zwischenverbindungsbus die erste Anzahl (206) von Kommunikationskanälen umfaßt.

24. Befehlssatz nach Anspruch 19, wobei die Rekonfiguration in Reaktion auf das Triggerereignis als eine auf einer Richtlinie basierende Systemverwaltungsentscheidung durchgeführt wird.

25. Befehlssatz nach Anspruch 24, wobei die auf einer Richtlinie basierende Entscheidung eine Analyse einer Anzahl von Entscheidungskriterien umfaßt.

26. Befehlssatz nach Anspruch 25, wobei die Anzahl von Entscheidungsparametern umfaßt:
Leistungsverwaltung, thermische Verwaltung, Zuverlässigkeit, Verfügbarkeit und Betriebsfähigkeit (RAS) und Systemleistung.

27. Befehlssatz nach Anspruch 25, wobei die Analyse und die Rekonfiguration zu einem Zeitpunkt nach einem Booten des Systems erfolgen.

## Revendications

1. Système de commande de débit de communication entre des composants électriques, comprenant : un premier composant (202) comprenant un premier port (208) à coupler à un premier nombre (206) de canaux de communication, ledit premier port pour commander la communication entre le premier port (208) et les canaux de communication à un premier débit de communication, de telle sorte que ledit premier port doit communiquer avec un second nombre (212) de canaux de communication en réponse à un événement de déclenchement, ledit nombre étant inférieur audit premier nombre, **caractérisé en ce qu'**une reconfiguration est effectuée par un gestionnaire thermique (211) pour passer d'une communication avec le premier nombre (206) de canaux au second nombre (212) de canaux.

2. Système selon la revendication 1, dans lequel une reconfiguration est effectuée par un gestionnaire de consommation électrique pour passer de la communication avec le premier nombre de canaux au second nombre de canaux.

3. Système selon la revendication 1, dans lequel une reconfiguration est effectuée par un système d'exploitation sous OSPM (Operating System-based Power Management) pour passer de la communication avec le premier nombre (206) de canaux au second nombre (212) de canaux.

4. Système selon la revendication 1, dans lequel ledit premier nombre (206) de canaux comprend ledit second nombre (212) de canaux comme sous-ensemble.

5. Système selon la revendication 4, dans lequel un bus d'interconnexion comprend ledit premier nombre de canaux de communication.

6. Système selon la revendication 1, dans lequel une reconfiguration est effectuée pour passer de la communication avec le premier nombre de canaux au second nombre de canaux en réponse audit événement de déclenchement en tant que décision de gestion du système basée sur une politique.

7. Système selon la revendication 6, dans lequel la décision basée sur une politique comprend l'analyse de plusieurs critères de décision.

8. Système selon la revendication 7, dans lequel ledit nombre de paramètres de décision comprend : La Gestion de consommation électrique ; la Gestion thermique ; la Fiabilité, la Disponibilité, et la Facilité de maintenance (RAS) ; et les Performances du système.

9. Système selon la revendication 7, dans lequel ladite analyse et ladite reconfiguration se produisent à un moment après l'amorçage du système.

10. Procédé de commande de débit de communication entre des composants électriques, comprenant : l'utilisation, par un premier composant (202), d'un premier nombre (206) de canaux de communication pour communiquer avec un second composant (204) à un premier débit de communication ; l'utilisation, par ledit premier composant (202), d'un second nombre (212) de canaux de communication pour communiquer avec ledit second composant (204) à un second débit de communication ; et la reconfiguration entre l'utilisation dudit premier nombre (206) de canaux et dudit second nombre (212) de canaux en réponse à un événement de déclenchement, **caractérisé en ce que** ladite reconfiguration est effectuée par un gestionnaire thermique (211) .

11. Procédé selon la revendication 10, dans lequel ladite reconfiguration est effectuée par un gestionnaire de consommation électrique (211).

12. Procédé selon la revendication 10, dans lequel ladite reconfiguration est effectuée par un système d'exploitation sous OPCM (Operating System-based Power Management).

13. Procédé selon la revendication 10, dans lequel ledit premier nombre (206) de canaux comprend ledit second nombre (212) de canaux comme sous-ensemble.

14. Procédé selon la revendication 13, dans lequel un bus d'interconnexion comprend ledit premier nombre de canaux de communication.

15. Procédé selon la revendication 10, dans lequel ladite reconfiguration est effectuée en réponse audit événement de déclenchement comme décision de gestion de système basée sur une politique.

16. Procédé selon la revendication 15, dans lequel ladite décision basée sur une politique comprend l'analyse de plusieurs critères de décision.

17. Système selon la revendication 16, dans lequel ledit nombre de paramètres de décision comprend : La Gestion de consommation électrique ; la Gestion thermique ; la Fiabilité, la Disponibilité, et la Facilité de maintenance (RAS) ; et les Performances du système.

18. Procédé selon la revendication 16, dans lequel ladite analyse et ladite reconfiguration se produisent à un moment après l'amorçage du système.

19. Jeu d'instructions résidant dans un moyen de stockage, ledit jeu d'instructions pouvant être exécuté par un processeur pour commander le débit de communication entre les composants électriques, comprenant :
l'utilisation, par un premier composant (202), d'un premier nombre (206) de canaux de communication pour communiquer avec un second composant (204) à un premier débit de communication ;
l'utilisation, par ledit premier composant (202), d'un second nombre (212) de canaux de communication pour communiquer avec ledit second composant (204) à un second débit de communication ; et
la reconfiguration entre l'utilisation dudit premier nombre (206) de canaux et dudit second nombre (212) de canaux en réponse à un événement de déclenchement, **caractérisé en ce que** ladite reconfiguration est effectuée par un gestionnaire thermique (211).

20. Jeu d'instructions selon la revendication 21, dans lequel ladite reconfiguration est effectuée par un gestionnaire de consommation électrique.

21. Jeu d'instructions selon la revendication 19, dans lequel ladite reconfiguration est effectuée par un système d'exploitation sous OPCM (Operating System-based Power Management).

22. Jeu d'instructions selon la revendication 19, dans lequel ledit premier nombre (206) de canaux comprend ledit second nombre (212) de canaux comme sous-ensemble.

23. Jeu d'instructions selon la revendication 22, dans lequel un bus d'interconnexion comprend ledit premier nombre (206) de canaux de communication.

24. Jeu d'instructions selon la revendication 19, dans lequel ladite reconfiguration est effectuée en réponse audit événement de déclenchement comme décision de gestion de système basée sur une politique.

25. Jeu d'instructions selon la revendication 24, dans lequel ladite décision basée sur une politique comprend l'analyse de plusieurs critères de décision.

26. Jeu d'instructions selon la revendication 25, dans lequel ledit nombre de paramètres de décision comprend : La Gestion de consommation électrique ; la Gestion thermique ; la Fiabilité, la Disponibilité, et la Facilité de maintenance (RAS) ; et les Performances du système.

27. Jeu d'instructions selon la revendication 25, dans lequel ladite analyse et ladite reconfiguration se produisent à un moment après l'amorçage du système.
